Europäisches Patentamt

European Patent Office

Office européen des brevets

(19)

(11) Publication number: **0 047 626**
**A1**

# EUROPEAN PATENT APPLICATION

(21) Application number: **81303992.2**

(22) Date of filing: **01.09.81**

(51) Int. Cl.³: **G 11 B 5/52**

(30) Priority: **01.09.80 JP 121647/80**

(43) Date of publication of application: **17.03.82**
**Bulletin 82/11**

(84) Designated Contracting States: **DE FR GB**

(71) Applicant: **Matsushita Electric Industrial Co., Ltd., 1006, Oaza Kadoma, Kadoma-shi Osaka-fu, 571 (JP)**

(72) Inventor: **Isaka, Takenobu, B-2-106, 3-1, Korigaoka, Kirakata-shi Osaka-fu (JP)**
Inventor: **Kobayashi, Masaaki, 1-17-2, Uguisudai, Kawanishi-shi Hyogo-ken (JP)**

(74) Representative: **Crawford, Andrew Birkby et al, A.A. THORNTON & CO. Northumberland House 303-306 High Holborn, London WC1V 7LE (GB)**

(54) **Tracking apparatus.**

(57) A tracking apparatus having an auto-tracking servo system which is constructed to allow a plurality of video heads to be automatically on-track by means of mechanical deviations of electric-mechanical conversion elements so that a video signal is reproduced from a magnetic tape on which said video signal of a given unit length is recorded as a recorded track having the predetermined inclination with respect to the lengthwise direction of said magnetic tape, said tracking apparatus being characterized in that a control means is provided which, when at least one of said video heads scans an adjacent track other than a desired one, controls said plurality of video heads to scan the desired track by means of positional information and head discrimination information of said video heads.

0047626

TRACKING APPARATUS

This invention relates to a tracking apparatus at
a helical scan type video tape recorder.

The so-called autotracking apparatus has been introduced for the purpose of allowing video heads to accurately
scan a recorded track.

The auto-tracking apparatus can provide a reproduced
picture without noise bands in specific mode reproduction,
such as slow reproduction or still reproduction at running
speed different from tape running speed during the recording. Such autotracking apparatus is so constructed that
usual video signal reproducing video heads are mounted
on a movable unit at electrical-mechanical conversion
elements, a search signal (e.g. sine-wave-like signal)
of drive signal is applied to the electric-mechanical
conversion elements, and the position of said video head
with respect to the recorded track is found from the
search signal and a reproduction envelope of the video
heads, so that a control loop is constructed to put the
video heads on track.

In a case that the tracking apparatus of the above
system uses a plurality of video heads, each video head
is controllable as the above, on a basis of its reproduction envelope. Hence, it is impossible to discriminate that the video head scans a desired track or an adjacent track, thereby creating the problem of producing the so-called "track jumping".

Hereinafter, such problem and the present invention for solving it will be detailed with reference to the drawings in which:

Fig. 1 is a block diagram of a principal portion of a conventional example;

Fig. 2 is a perspective view exemplary of mounting video heads and electric-mechanic elements;

Fig. 3 shows wave form charts explanatory of the auto-tracking servo operation in Fig. 1;

Fig. 4 is a view explanatory of the track-jumping condition of the video head;

Fig. 5 is a block diagram of a principal portion of an embodiment of the invention;

Fig. 6 shows the track-jumping of video head together with voltage applied to the electrical-mechanical conversion element; and

Fig. 7 is a circuit diagram of a concrete embodiment of the invention.

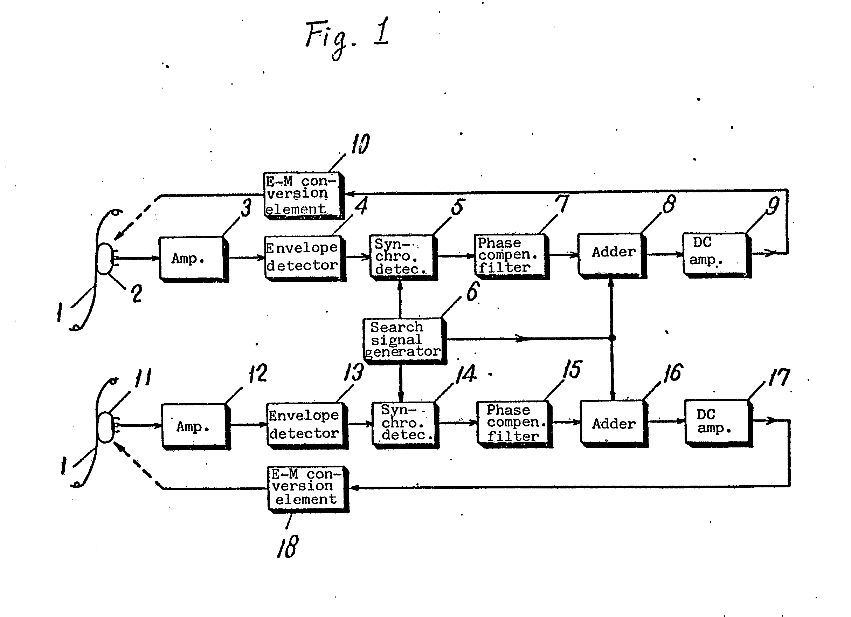

Fig. 1 is a block diagram of the principal portion of a conventional autotracking apparatus using a search signal, which is applied to a two head helical scan type video tape recorder.

In Fig. 1, RF signals reproduced by video heads 2, 11 are given to amplifiers 3, 12. The reproduced signal amplified moderately at amplifiers 3, 12 are given to envelope detectors 4, 13. Envelope detectors 4, 13 are composed of normal diode detecting circuits and output envelope signals. Synchronous detectors 5, 14 are given the envelope signals and a search signal generated by a search signal generator 6. Synchronous detectors 5, 14 serve as multiplication units for multiplying the two given signals, whose detection outputs are given to each one input terminal of adders 8, 16 through phase compensating filters 7, 15 composed of, for example, a

low-pass filter unit, and the search signal from search signal generator 6 is given to the other input terminal of each adder 8 or 16. Output signals of adders 8, 16 drive an electrical-mechanical conversion elements 10, 18 through D.C. amplifiers 9, 17.

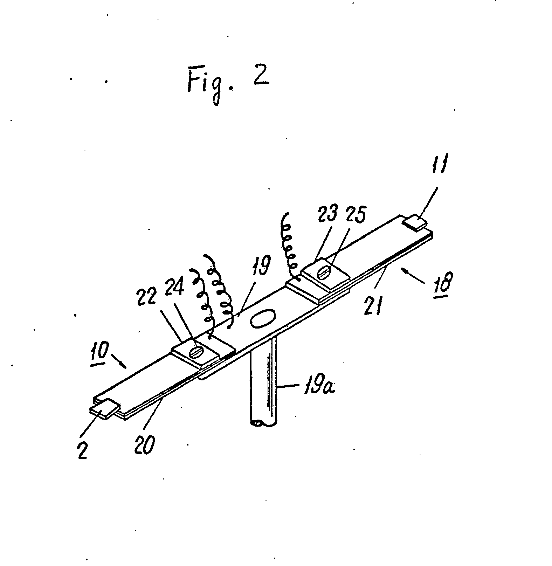

Now, electric-mechanical conversion elements 10, 18 will be detailed in accordance with Fig. 2, in which a principal portion of a mechanism line of rotary heads including video heads 2, 11. In the same drawing, at both ends of rotary base 19 mounted on a motor shaft 19a are fixed piezo-electric elements 20, 21 at each one terminal thereof through fixing plates 22, 23 and fixing screws 24, 25, and on the other end, i.e., movable end, of each piezo-electric element 20 or 21 are mounted video heads 2, 11. The piezo-electric elements 20, 21 comprise two piezo-electric bimorph vibrators having electrodes at both surfaces and being stuck with each other, and their polarization directions are defined lengthwise, so that when voltage is applied between the electrodes, the elements 20, 21 each deflect (mechanically deviated) in the polarization direction corresponding to intensity of the applied voltage.

Hence, video heads 2, 11 mounted on piezo-electric elements 20, 21 similarly deflect respectively.

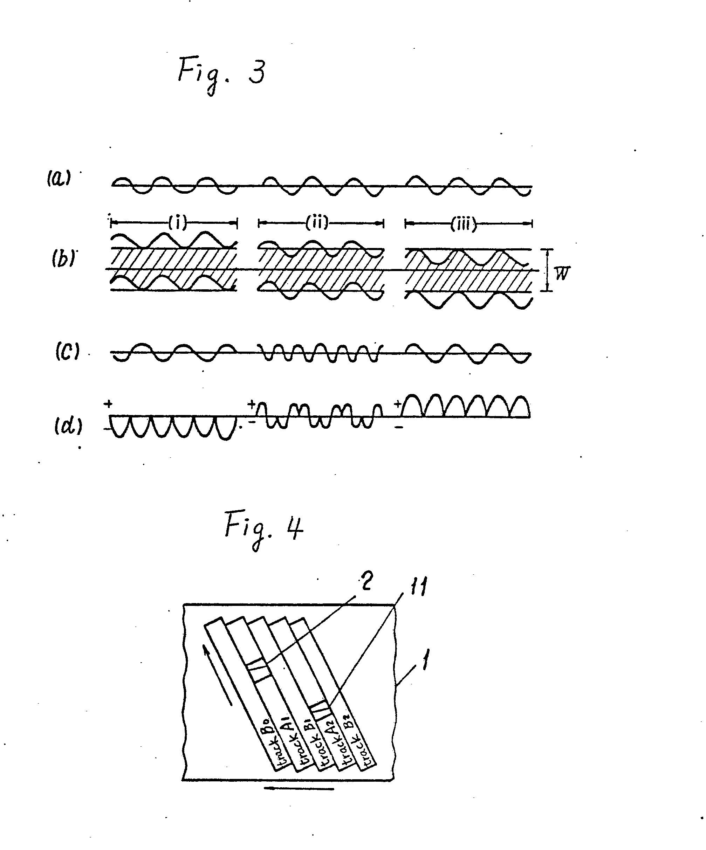

In Fig. 1, video head 2, amplifier 3, envelope detector 4, synchronous detector 5, phase compensating filter 7, adder 8, DC amplifier 9, and electrical-mechanical conversion element 10; and video head 11, amplifier 12, envelope detector 13, synchronous detector 14, phase compensating filter 15, adder 16, DC amplifier 17, and electric-mechanical conversion element 18; constitute automatic tracking servo loops respectively. Referring to Fig. 3, operation of the autotracking servo loop will be detailed. Electrical-mechanical conversion elements 10, 18 are given search signal a in Fig. 3 (a), an output signal from search signal generator 6, so as to vibrate, whereby video heads 2, 11, while vibrating, scan a recorded track of a width W as shown in Fig. 3 (b). Therefore, a portion shown by the oblique lines in the same drawing is an effective width of the track. In addition, in Figs. 3 (b), (c) and (d), a period (i) shows video head 2 or 11 shifting upwardly with respect to the track, that (ii) shows it on track, and that (iii) shows it in track-shifting downwardly. Envelope detecting signal c shown in Fig. 3 (c), following the above, shows anti-phase, two times frequency, and in-phase with respect to search signal a in the respective periods (i), (ii), and (iii).

Next, outputs of synchronous detectors 5, 14 multiplied by search signal a and envelope signal c, can obtain detection output wave forms d in the respective periods (i), (ii) and (iii) as shown in Fig. 3 (d).

The detecting output wave from d represents the track-shifting direction, and applies to piezo-electric element of electrical-mechanical conversion elements 10, 18 an error voltage which phase-compensates the feedback loop by the following phase-compensating filter so that the error voltage is reverse to the track-shifting direction.  Hence, a negative feedback loop, i.e., auto- tracking servo loop is completed.

Since the aforesaid autotracking servo is in phase- comparison with the envelope signal with respect to the search signal, the video head 2 or 11, even when scanning a recorded track different from the desired one, will, if on-track, complete the feedback loop.

Referring to Fig. 4, in a case that tracks $A_1$, $A_2$ recorded on magnetic tape 1 by a video head of azimuth angle of + $6^{\circ}$ and those $B_0$, $B_1$, and $B_2$ recorded on the same by a video head of azimuth angle of - $6^{\circ}$, are reproduced by video heads 2, 11 of azimuth angle of + $6^{\circ}$ during the reproduction, video heads 2, 11 are shown in condition of scanning different recorded tracks $A_1$ and $A_2$, that is, the "track jumping".  Each recorded track records a video signal corresponding to one field such as $B_0$, $A_1$, $B_1$, $A_2$ or $B_2$.  The occurrence of "track jumping" leads to alternate reproduction of recorded tracks $A_1$ and $A_2$ during the still reproduction, whereby the bad influence, such as the occurrence of picture deflection or vertical movement of the picture, is created in spite of the still picture.

This invention is directed to discrimination of the video head scanning the adjacent track and to detection of the direction of a desired track when the aforesaid "track jumping" occurs, so that the detected information is used to control the electrical-mechanical conversion element to thereby keep the video head on-track, thus intending to solve the problem in the conventional example. Next, an embodiment of the invention will be described in accordance with the drawings.

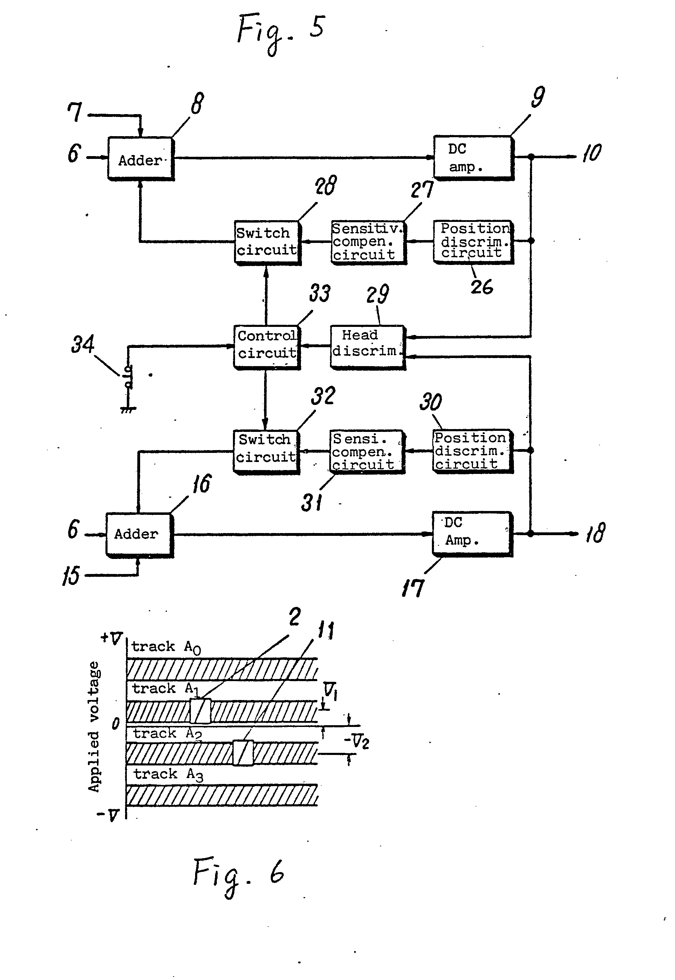

Fig. 5 is a block diagram of a principal portion, i.e., an autotracking servo line, of the embodiment of the invention, in which the same components as in Fig. 1 are designated by the same reference numerals. The Fig. 1 construction is applicable to components other than those shown, and is omitted from Fig. 5. In Fig. 5, the error voltage applied to electric-mechanical elements 10, 18, that is, output voltages of DC amplifiers 9, 17 as shown in Figs. 1 and 2, are given to position discriminating circuits 26, 30 and a head discriminating circuit 29.

The position discriminating circuits 26, 30 discriminate voltage either in the positive polarity direction or in the negative polarity direction is applied to video heads 2, 11, that is, electric-mechanical elements 10, 18. Now, assuming that voltage of positive polarity is applied, voltage of negative polarity is output from its output terminal. The head discriminating circuit 29 serves to perform a subtraction process of output voltage of respective DC amplifiers 9, 17, in which the output voltage of DC amplifier 17 is subtracted from that of DC amplifier 9.

Outputs of position discriminating circuits 26, 30 are given to sensitivity compensating circuits 27, 31. The sensitivity compensating circuits 27, 31 convert the output voltages of position discriminating circuits 26, 30 into voltages corresponding to sensitivity of electrical-mechanical conversion elements and recorded track pitch. Outputs of sensitivity compensating circuits 27, 31 are given to switch circuits 28, 32. An output of a head discriminating circuit 29 is given to a control circuit 33, which turns on and off switch circuits 28, 32 by means of the output of head discriminating circuit 32 and a track-jumping compensating switch 34 to be hereinafter described.

Referring to Fig. 6, voltage (i.e. an amount of deviation) applied to electric-mechanical conversion elements 10, 18 with respect to recorded tracks on magnetic tape 1 is shown widthwise of each recorded track.

In addition, regarding the recorded tracks, since reproducing video heads 2, 11 each are of an azimuth angle of + 6$^o$, the recorded tracks each recorded at an azimuth angle of + 6$^o$ are shown, video head 2 scanning recorded track $A_1$ and video head 11 scanning recorded track $A_2$.

This represents the occurrence of track jumping. Voltage $V_1$ is applied to electrical-mechanical conversion element 10 to allow video head 2 to be put on recorded track $A_1$ and voltage - $V_2$ is given to electrical-mechanical conversion element 18 to allow video head 11 to be put on the electrical-mechanical conversion element 18.

The track-jumping occurs essentially relatively, where the recorded track, on which a video head of a lower voltage applied to electrical-mechanical conversion element 10 or 18, is assumed to be a desired track. Hence, in a condition of Fig. 6, head discriminating circuit 29 indicates video head 11. At that time, position discriminating circuit 30 outputs voltage in the positive polarity direction, whereby a compensating voltage given to adder 16 through sensitivity compensating circuit 31 and switch circuit 32, allows electrical-mechanical conversion element 18 to be upwardly deviated.

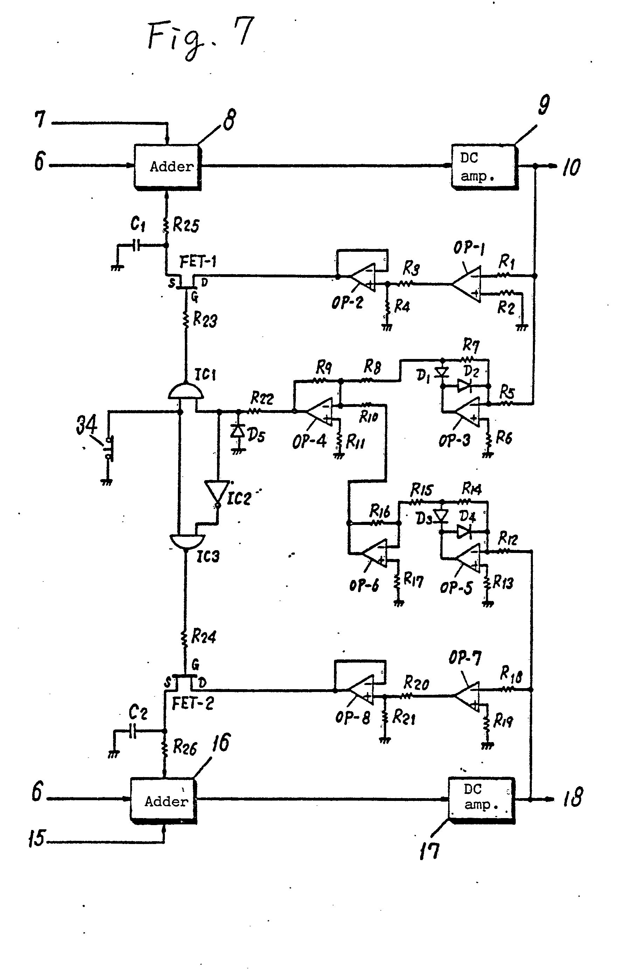

Fig. 7 is a circuit diagram further concretely representing the Fig. 5 embodiment, in which position discriminating circuits 26, 30, which comprise an operational amplifiers (to be hereinafter abbreviated to the ope-amp.) OP-1, resistances $R_1$, $R_2$, ope-amp. OP-7, and resistance $R_{18}$, $R_{19}$, operate as comparators.

Voltage $V_1$ given to a minus input terminal through resistance $R_1$ and to be given to electric-mechanical conversion element 10, is a constant voltage obtained at an output terminal of ope-amp. OR-1, the constant voltage being saturation voltage about minus supply voltage, in other words, about - 11 V, when the supply voltage is assumed to be $\pm$ 12 V, because a plus input terminal is earthed through resistance $R_2$. Similarly, a voltage of + 11 V is obtained at an output terminal of ope-amp. OP-7 because a minus input terminal is given an input voltage of - $V_2$. Output voltages of ope-amps. OP-1, OP-2 are converted into voltages, which are given to electrical-mechanical conversion elements 10, 18 through sensitivity compensating circuits 27, 31 comprising resistances $R_3$, $R_4$ and ope-amp. OR-2, or resistances $R_{20}$, $R_{21}$ and ope-amp. OP-8, and which are suitable to shift video head 2 or 11 from the adjacent track to a desired one.

Resistances $R_5$, $R_6$, $R_7$, $R_8$, $R_9$, $R_{11}$, diodes $D_1$, $D_2$ and ope-amps, OP-3, OP-4, constitute the generally well-known absolute value circuit to both-wave-rectify drive voltage given to electrical-mechanical conversion element

10. Similarly, resistances $R_{12}$ to $R_{17}$, diodes $D_3$, $D_4$, and ope-amps. OP-5, OP-6, both-wave-rectify drive voltage given to electrical-mechanical element 18. In addition, an input signal given to ope-amp. OP-4 through $R_8$ and that given to the same through resistance $R_{10}$, are added to each other at ope-amp. OP-4, which acts as a subtractor because ope-amp. OP-6 is an inverter.

Now, ope-amp. OP-4 can output saturation voltage of positive polarity or negative polarity corresponding to voltage given to two electrical-mechanical conversion elements 10, 18, the saturation voltage being given to one input terminal of a NAND circuit IC-1 through resistance $R_{22}$ and diode $D_5$, and being given to one input terminal of a NAND circuit IC-3 through an inverter IC-2. The other input terminals of NAND circuits IC-1, IC-3 are connected to a track-jumping compensating switch 34, so that when two input terminals of NAND gate IC-1 or IC-3 are on a high level, an output terminal of the same is on a low level, thus producing the track-jumping compensating condition.

Next, P-channel type field-effect transistors EFT-1, EFT-2, operate as switches to be conductive when 0 V is given to gate input terminals G through resistances $R_{23}$, $R_{24}$, thereby supplying track-jumping compensating voltage to an adder 8 or 16.

In addition, resistances $R_{25}$, $R_{26}$, and condensers $C_1$, $C_2$, are time constant circuits not to newly generate the track-jumping by switching FET-1 or FET-2 because a stepped signal is given to adders 8, 16 through FET-1, FET-2.

As seen from the above, this invention, when the track-jumping occurs, discriminates the head creating the track jumping and the compensating direction (voltage) to change the scanning track, thereby ensuring that the autotracking servo can put a plurality of video heads on the desired track, thus being considerably advantageous.

In addition, in the embodiment of the invention, reproduction of the recorded track of azimuth angle is explained, but even when a recorded track of single azimuth angle and with a guard band is reproduced, the track-jumping will occur, so that this invention is applicable similarly to compensation of the track-jumping.

CLAIMS:

1. A tracking apparatus having an auto-tracking servo system which is constructed to allow a plurality of video heads to be automatically on-track by means of mechanical deviations of electric-mechanical conversion elements so that a video signal is reproduced from a magnetic tape on which said video signal of a given unit length is recorded as a recorded track having the predetermined inclination with respect to the lengthwise direction of said magnetic tape, said tracking apparatus being characterized in that a control means is provided which, when at least one of said video heads scans an adjacent track other than a desired one, controls said plurality of video heads to scan the desired track by means of positional information and head discrimination information of said video heads.

2. A tracking apparatus according to claim 1, characterized in that an error signal in an autotracking servo group is adapted to be used as said positional information at said video head.

3. A tracking apparatus according to claim 1, characterized in that a comparison signal which is obtained by comparing intensity of a plurality of autotracking signals, is used as said head discriminating information.

Fig. 1

Fig. 2

**Fig. 3**

**Fig. 4**

Fig. 5

Fig. 6

# Fig. 7

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE – A1 – 2 950 607 (PHILIPS) <br> * claims 1 to 4; page 4, line 1 to page 7, line 34 * <br> & GB – A – 2 039 098 <br> –– | 1-3 | G 11 B 5/52 |
| A | GB – A – 2 029 607 (PHILIPS) <br> * page 1, line 1 to page 2, line 8 * <br> –– | | |
| A | FR – A1 – 2 426 377 (SONY) <br> * page 1, line 1 to page 3, line 12 * <br> & GB – A – 2 024 463 <br> –––– | | **TECHNICAL FIELDS SEARCHED** (Int. Cl.³) <br><br> G 11 B 5/52 <br> H 04 N 5/78 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

| X | The present search report has been drawn up for all claims | | |
|---|---|---|---|
| Place of search <br> Berlin | Date of completion of the search <br> 27-11-1981 | Examiner <br> ROGNONI | |

EPO Form 1503.1   06.78